Europäisches Patentamt

European Patent Office

Office européen des brevets

(19)

(11) EP 0 717 291 B1

## (12) FASCICULE DE BREVET EUROPEEN

(45) Date de publication et mention
de la délivrance du brevet:
**17.03.1999 Bulletin 1999/11**

(51) Int Cl.$^6$: **G01T 1/29**

(21) Numéro de dépôt: **95402802.3**

(22) Date de dépôt: **13.12.1995**

(54) **Procédé de mesure des dimensions du foyer optique d'un tube radiogène**

Verfahren zur Messung der Focus-Dimension eines Röntgenröhres

Method of measuring the focus dimension of a X-ray tube

(84) Etats contractants désignés:
**AT BE DE ES FR GB GR IT SE**

(30) Priorité: **14.12.1994 FR 9415045**

(43) Date de publication de la demande:
**19.06.1996 Bulletin 1996/25**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
• **Montel, Etienne C.**
**F-92170 Vanves (FR)**
• **Prejean-Lefevre, Véronique H.M.P.**
**F-92330 Sceaux (FR)**

(56) Documents cités:
**EP-A- 0 425 333**        **FR-A- 2 485 208**

• **PHYSICS IN MEDICINE AND BIOLOGY, JULY 1973, UK, vol. 18, no. 4, Juillet 1973 ISSN 0031-9155, pages 540-549, ARNOLD B A ET AL 'A modified pinhole camera method for investigation of X-ray tube focal spots'**

## Description

L'invention concerne un procédé de mesure des dimensions du foyer optique d'un tube radiogène à partir d'un film obtenu au moyen d'une chambre à sténopé. Elle s'applique notamment au contrôle radiographique de pièces. Il est courant de faire appel au contrôle radiographique pour déceler des défauts internes dans une pièce. Ces défauts peuvent être des manques de matière ou une présence de matières de densité différente. Dans le cas d'une radiographie sur un film, les manques de matière forment sur le radiogramme des zones plus foncées dues à une absorption plus faible du rayonnement, et la présence de matières plus denses ou moins denses donnent sur la radiogramme des zones respectivement plus claires et plus foncées dues à une absorption différente du rayonnement. Cette méthode ne permet cependant pas de déceler les défauts au-dessous d'une certaine taille minimale, cette taille minimale dépendant de la sensibilité du détecteur, de la puissance du tube radiogène et des dimensions du foyer optique du tube radiogène. Pour détecter des défauts dans une pièce et en mesurer les dimensions, il est donc nécessaire de connaitre les caractéristiques du tube radiogène et en particulier de connaitre les dimensions du foyer optique de ce tube.

Par ailleurs, la taille du foyer optique et l'homogénéité du faisceau émis pouvant évoluer au cours du temps, il est nécessaire de pouvoir contrôler les dimensions de ce foyer et de contrôler l'homogénéité du faisceau émis en cas de doute si la qualité des images obtenues s'est dégradée, et même d'effectuer périodiquement ces contrôles pour s'assurer qu'il n'y a pas de dérives.

Pour effectuer une mesure des dimensions du foyer optique d'un tube radiogène, il est connu d'utiliser une chambre à sténopé, de placer la chambre à sténopé sur la trajectoire des rayons issus de l'anode d'un tube à rayons X et de réaliser une image radiographique du foyer optique sur une pellicule à grains fins sensible aux rayons X. Par le choix approprié des distances entre le sténopé et le plan du film et entre le foyer du tube et le sténopé, on obtient sur le film une image agrandie du foyer. L'image ainsi obtenue peut être examinée, de façon connue, à l'oeil au travers d'une loupe graduée ou en utilisant un microdensitomètre.

Dans le cas de l'examen de l'image à l'oeil, la mesure des dimensions du foyer est effectuée à partir des bords perceptibles de l'image et en tenant compte du facteur de grandissement. Cependant, cette méthode étant subjective, elle n'est pas fiable et conduit à des résultats différents d'un opérateur à l'autre.

Dans le cas de l'examen de l'image au moyen d'un microdensitomètre, la mesure est effectuée de façon automatique. Le microdensitomètre s'étalonne, effectue une coupe suivant une seule ligne de l'image, et mesure la dimension du foyer optique à partir de cette coupe. Cette méthode est très précise à condition de positionner correctement le microdensitomètre pour que la coupe soit effectuée à l'endroit où la tache matérialisant le foyer optique est la plus large. Cependant, la coupe ainsi réalisée ne permettant de voir qu'une seule ligne d'image à la fois, cette méthode ne permet pas de connaître la répartition de l'énergie et de vérifier l'homogénéité du faisceau émis. La répartition d'énergie ne peut être obtenue qu'en effectuant un scanning complet du film, ce qui prend beaucoup de temps et est très onéreux.

L'invention a pour objet un procédé de mesure des dimensions du foyer optique d'un tube radiogène qui est fiable et rapide, qui ne nécessite pas d'appareillage spécifique et onéreux, et qui permet d'obtenir une représentation simple de la répartition de l'énergie émise par le tube radiogène.

Pour cela, le procédé consiste à réaliser une image radiographique du foyer optique sur une pellicule à grains fins sensible aux rayons X, à éclairer le film obtenu au moyen d'une lampe émettant un rayonnement homogène et d'intensité constante dans le temps, à faire l'acquisition d'une image vidéo du film au moyen d'une caméra, à traiter l'image vidéo de manière à obtenir une image binaire du foyer optique, et à mesurer les dimensions du foyer optique à partir de l'image binaire obtenue.

Selon l'invention, le procédé de mesure des dimensions du foyer optique d'un tube radiogène consiste :

- dans une étape 1, à faire l'acquisition d'une image vidéo d'un film étalon présentant des plages de densités différentes, progressives et connues,

- dans une étape 2, à réaliser une courbe d'étalonnage de l'image en dimension et une courbe d'étalonnage en densité,

- dans une étape 3, à réaliser un film représentant une image radiographique du foyer optique du tube radiogène,

- dans une étape 4, à faire l'acquisition d'une image vidéo du film représentant l'image radiographique du foyer optique,

- dans une étape 5, à évaluer la densité du voile de base du film représentant l'image radiographique du foyer optique,

- dans une étape 6, à calculer une densité de seuillage et à déterminer au moyen de la courbe d'étalonnage en densité le niveau de gris correspondant dans l'image vidéo du film de l'étape 3,

- dans une étape 7, à binariser l'image vidéo de l'étape 4 à une valeur de seuil égale au niveau de gris déterminé dans l'étape 6,

- dans une étape 8, à mesurer les dimensions du foyer optique du tube radiogène à partir de l'image vidéo binarisée et en utilisant la courbe d'étalonnage en dimension.

D'autres particularités et avantages de l'invention apparaitront clairement dans la suite de la description donnée à titre d'exemple non limitatif et faite en regard des figures annexées qui représentent :

- la figure 1, un schéma de principe d'un dispositif de mesure, selon l'invention ;

- la figure 2, un schéma synoptique des étapes du procédé de mesure, selon l'invention.

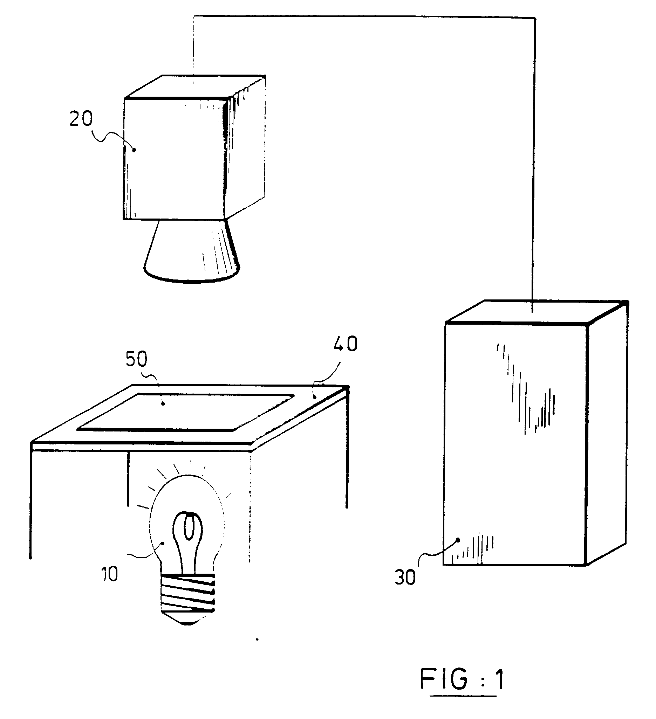

Le dispositif de mesure représenté sur la figure 1 comporte une source de lumière 10, émettant un rayonnement homogène, par exemple une lampe de lumière blanche, une caméra vidéo 20 munie d'un objectif, un dispositif de traitement d'image 30 et un support de film 40. Le film 50 à analyser est placé sur le support de film entre la lampe et la caméra vidéo.

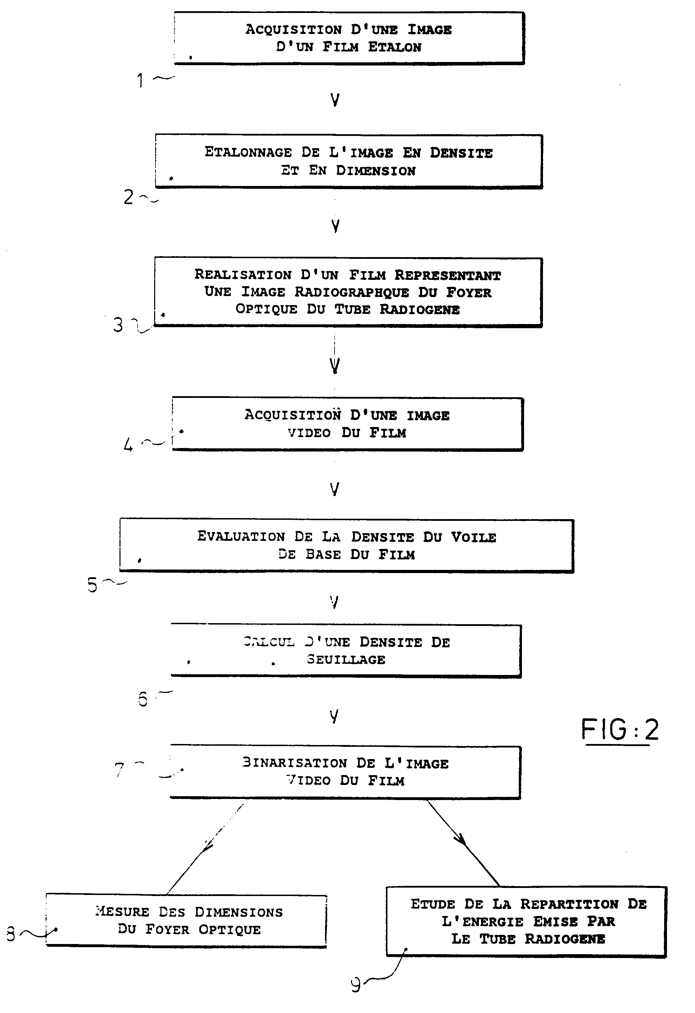

La figure 2 représente un schéma synoptique des étapes du procédé de mesure, selon l'invention.

Le procédé de mesure consiste dans une première étape 1, à faire l'acquisition d'une image vidéo d'un film étalon. Le film étalon est un film présentant des plages de densités connues différentes et progressives comprises au minimum entre 0,2 et 2.5. Ce film étalon peut être réalisé, par exemple, en utilisant une cale métallique à gradins comportant des plages d'épaisseurs différentes et en réalisant une image radiographique de cette cale à gradins sur une pellicule à grains fins sensible aux rayons X. Il est également possible de réaliser plusieurs films étalon en utilisant pour chaque film une plaque d'épaisseur donnée, différente de l'épaisseur des autres plaques. Les différents films représentant les images radiographiques des différentes plaques, sont réalisés sur des pellicules à grains fins identiques.

Le film étalon est placé sur le support de film 40 et une acquisition d'une image de ce film est effectuée par la caméra vidéo 20.

Dans une deuxième étape 2, une courbe d'étalonnage en densité et une courbe d'étalonnage en dimension sont effectuées. La courbe d'étalonnage en densité est réalisée en attribuant à chaque densité du film étalon, la correspondance en niveau de gris obtenu sur l'image de ce film. La courbe d'étalonnage en dimension est effectuée au moyen d'un réticule gradué par exemple avec des divisions de 0,1 mm pour les axes horizontal et vertical de l'image. Cette courbe d'étalonnage permet de connaitre les dimensions d'un pixel de l'image.

Dans une troisième étape 3, une image radiographique du foyer optique d'un tube radiogène est réalisée sur une pellicule à grains fins sensible aux rayons X identique à celle utilisée pour la réalisation du film étalon. Le film est réalisé de façon classique au moyen d'une chambre à sténopé située à une distance a de l'anode constituant le foyer optique du tube à rayons X, la pellicule étant située à une distance b du sténopé. Le rapport de la distance b entre le sténopé et la pellicule à la distance a entre le foyer et le sténopé représente le facteur de grandissement de l'image du foyer produit sur le film.

Dans une quatrième étape 4, le film étalon est enlevé du support de film 40 et remplacé par le film représentant une image radiographique du foyer optique du tube radiogène. Une acquisition d'une image vidéo de ce film est alors effectuée par la caméra vidéo 20.

Dans une cinquième étape 5, une évaluation de la densité du voile de base, notée DV, du film représentant l'image radiographique du foyer optique du tube radiogène est effectuée. La densité du voile de base du film est la densité de la partie du film non exposée aux rayons X. Cette évaluation peut être obtenue par lecture directe au moyen d'un densitomètre étalonné, ou à partir du niveau de gris correspondant à ce voile de base dans l'image vidéo et en utilisant la courbe d'étalonnage en densité.

Dans une sixième étape 6, la densité de seuillage, notée DS, est calculée. Le calcul est effectué conformément aux indications données par la norme NFC74-100 :

$$DS = 1{,}1\ DV$$

Cette densité de seuillage correspond à un taux de contraste de 5% dans l'image. La correspondance de cette densité de seuillage en niveau de gris est alors déterminée à partir de la courbe d'étalonnage en densité et utilisée dans une étape 7 pour binariser l'image vidéo du film.

La détermination des dimensions du foyer optique du tube radiogène est alors effectuée dans une étape 8 à partir de l'image vidéo binarisée et en utilisant la courbe d'étalonnage en dimension. Les dimensions qui sont typiquement mesurées sont la hauteur et la largeur du foyer. Les valeurs retenues sont les valeurs maximales mesurées sur l'image en niveau de gris binarisée.

L'image en niveau de gris binarisée permet également dans une étape 9, d'étudier la répartition de l'énergie émise par le tube radiogène, cette répartition d'énergie étant représentée par les variations de niveau de gris contenues dans cette image. Cette étude permet alors d'expliquer des éventuels problèmes d'inhomogénéité dans l'image formée.

Les acquisitions des images vidéo sont de préférence effectuées avec un facteur de grandissement tel que le foyer optique occupe une grande partie de l'image, ce facteur de grandissement étant constant pour toutes les acquisitions d'images vidéo effectuées pendant les étapes 1 et 4.

Par ailleurs, il est préférable que le réglage de la caméra soit effectué de manière que le niveau de gain et le niveau de noir soient constants pour toutes les acquisitions d'image vidéo.

## Revendications

1. Procédé de mesure des dimensions du foyer optique d'un tube radiogène, caractérisé en ce qu'il consiste :

   - dans une étape 1, à faire l'acquisition d'une image vidéo d'un film étalon présentant des plages de densités différentes, progressives et connues,

   - dans une étape 2, à réaliser une courbe d'étalonnage de l'image en dimension et une courbe d'étalonnage en densité,

   - dans une étape 3, à réaliser un film représentant une image radiographique du foyer optique du tube radiogène,

   - dans une étape 4, à faire l'acquisition d'une image vidéo du film représentant l'image radiographique du foyer optique,

   - dans une étape 5, à évaluer la densité du voile de base du film représentant l'image radiographique du foyer optique,

   - dans une étape 6, à calculer une densité de seuillage et à déterminer au moyen de la courbe d'étalonnage en densité le niveau de gris correspondant dans l'image vidéo du film de l'étape 3,

   - dans une étape 7, à binariser l'image vidéo de l'étape 4 à une valeur de seuil égale au niveau se gris déterminé dans l'étape 6,

   - dans une étape 8, à mesurer les dimensions du foyer optique du tube radiogène à partir de l'image vidéo binarisée et en utilisant la courbe d'étalonnage en dimension.

2. Procédé de mesure selon la revendication 1, caractérisé en ce qu'il consiste en outre, dans une étape 9, à étudier la répartition de l'énergie émise par le tube à partir de l'image vidéo binarisée.

3. Procédé de mesure selon l'une quelconque des revendications 1 ou 2, caractérisé en ce que le film représentant l'image radiographique du foyer optique est réalisé en utilisant une chambre à sténopé placée sur le trajet du faisceau de rayons X émis par le tube radiogène.

4. Procédé de mesure selon la revendication 3, caractérisé en ce que la densité du voile de base du film est obtenue par lecture directe au moyen d'un densitomètre étalonné.

5. Procédé de mesure selon la revendication 3, caractérisé en ce que la densité du voile de base du film est obtenue à partir du niveau de gris correspondant à ce voile de base dans l'image vidéo et en utilisant la courbe d'étalonnage en densité.

## Patentansprüche

1. Verfahren zur Messung der Dimensionen des optischen Brennpunkts einer Röntgenröhre, dadurch gekennzeichnet, daß

   - in einem Schritt 1 ein Videobild eines Eichfilms hergestellt wird, der Bereiche mit verschiedenen, progressiven und bekannten Dichten aufweist,
   - in einem Schritt 2 eine Dimensionseichkurve des Bildes und eine Dichteeichkurve gewonnen werden,
   - in einem Schritt 3 ein Film hergestellt wird, der ein Röntgenbild des optischen Brennpunkts der Röntgenröhre darstellt,
   - in einem Schritt 4 ein Videobild des Films gewonnen wird, der das Röntgenbild des optischen Brennpunkts darstellt,
   - in einem Schritt 5 die Dichte des Grundschleiers des Films bewertet wird, der das Röntgenbild darstellt,
   - in einem Schritt 6 eine Schwellwertdichte berechnet wird und mit Hilfe der Dichteeichkurve der entsprechende Graupegel in dem Videobild des in dem Schritt 3 hergestellten Films bestimmt wird,
   - in einem Schritt 7 das in dem Schritt 4 gewonne Videobild mit einem Schwellwert binär digitalisiert wird, der gleich dem in dem Schritt 6 bestimmten Graupegel ist,
   - in einem Schritt 8 die Dimensionen des optischen Brennpunkts der Röntgenröhre aus dem binär digitalisierten Videobild und unter Benutzung der Dimensionseichkurve gemessen werden.

2. Meßverfahren nach Anspruch 1, dadurch gekennzeichnet, daß in einem weiteren Schritt 9 die Verteilung der von der Röhre emittierten Energie aus dem binar digitalisierten Videobild untersucht wird.

3. Meßverfahren nach einem der Ansprüche 1 oder 2, dadurch gekennzeichnet, daß der Film, der das Röntgenbild des optischen Brennpunkts darstellt, unter Verwendung einer Lochblendenkammer gewonnen wird, die in dem Strahlenpfad des von der Röntgenröhre emittierten Röntgenstrahlenbündels angeordnet ist.

4. Meßverfahren nach Anspruch 3, dadurch gekennzeichnet, daß die Dichte des Grundschleiers des Films durch direktes Ablesen mittels eines geeichten Dichtmessers gewonnen wird.

5. Meßverfahren nach Anspruch 3, dadurch gekennzeichnet, daß die Dichte des Grundschleiers des Films aus dem diesem Grundschleier in dem Videobild entsprechenden Graupegel und unter Verwendung der Dichteeichkurve gewonnen wird.

## Claims

1. Procedure for measuring the dimensions of the optical focus of an X-ray tube, characterized in that it consists:

    - in a step 1, in taking a video image of a standard radiogram having regions of different, progressive and known densities;
    - in a step 2, in producing a dimensional calibration curve for the image and a density calibration curve;
    - in a step 3, in producing a radiogram representing an X-ray image of the optical focus of the X-ray tube;
    - in a step 4, in taking a video image of the radiogram representing the X-ray image of the optical focus;
    - in a step 5, in evaluating the density of the basic haze in the radiogram representing the X-ray image of the optical focus;
    - in a step 6, in calculating a threshold density and in determining the corresponding grey level in the video image of the radiogram of step 3 by means of the density calibration curve;
    - in a step 7, in digitizing the video image of step 4 at a threshold value equal to the grey level determined in step 6;
    - in a step 8, in measuring the dimensions of the optical focus of the X-ray tube by using the digitized video image and by using the dimensional calibration curve.

2. Measurement procedure according to Claim 1, characterized in that it furthermore consists, in a step 9, in examining the distribution of the energy emitted by the tube by using the digitized video image.

3. Measurement procedure according to either of Claims 1 and 2, characterized in that the radiogram representing the X-ray image of the optical focus is produced by using a pinhole camera placed in the path of the X-ray beam emitted by the X-ray tube.

4. Measurement procedure according to Claim 3, characterized in that the density of the basic haze in the radiogram is obtained by direct reading, by means of a calibrated densitometer.

5. Measurement procedure according to Claim 3, characterized in that the density of the basic haze in the radiogram is obtained from the grey level corresponding to this basic haze in the video image and by using the density calibration curve.

FIG : 1

ACQUISITION D'UNE IMAGE
D'UN FILM ETALON

1 ~

$\vee$

ETALONNAGE DE L'IMAGE EN DENSITE
ET EN DIMENSION

2 ~

$\vee$

REALISATION D'UN FILM REPRESENTANT
UNE IMAGE RADIOGRAPHQUE DU FOYER
OPTIQUE DU TUBE RADIOGENE

3 ~

$\vee$

ACQUISITION D'UNE IMAGE
VIDEO DU FILM

4 ~

$\vee$

EVALUATION DE LA DENSITE DU VOILE
DE BASE DU FILM

5 ~

$\vee$

CALCUL D'UNE DENSITE DE
SEUILLAGE

6 ~

$\vee$

FIG : 2

BINARISATION DE L'IMAGE
VIDEO DU FILM

7 ~

MESURE DES DIMENSIONS
DU FOYER OPTIQUE

8 ~

ETUDE DE LA REPARTITION DE
L'ENERGIE EMISE PAR
LE TUBE RADIOGENE

9 ~